(19) Europäisches Patentamt
European Patent Office
Office européen des brevets

(11) EP 1 422 660 A2

(12) EUROPEAN PATENT APPLICATION

(43) Date of publication:
26.05.2004 Bulletin 2004/22

(51) Int Cl.[7]: G06T 3/00

(21) Application number: 03078465.6

(22) Date of filing: 03.11.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 22.11.2002 US 302033

(71) Applicant: EASTMAN KODAK COMPANY
Rochester, New York 14650 (US)

(72) Inventors:
- Chen, Shoupu
Rochester, New York 14650-2201 (US)
- Cahill, Nathan D.
Rochester, New York 14650-2201 (US)
- Revelli, Joseph F., Jr.
Rochester, New York 14650-2201 (US)
- Ray, Lawrence A.
Rochester, New York 14650-2201 (US)

(74) Representative: Haile, Helen Cynthia et al
Kodak Limited,
Patents Department (W92-3A),
Headstone Drive
Harrow, Middlesex HA1 4TY (GB)

# (54) Method and system for generating images used in extended range panorama composition

(57) In a method of obtaining an extended dynamic range panorama of a scene from a plurality of limited dynamic range images captured by an image sensor in a digital camera, a plurality of digital images comprising image pixels of the scene are captured from a plurality of positions by exposing the image sensor to light transmitted from the scene, wherein light transmittance upon the image sensor is adjustable. Each image is evaluated after it is captured for an illumination level exceeding the limited dynamic range of the image for at least some of the image pixels. Based on the evaluation of each image exceeding the limited dynamic range, the light transmittance upon the image sensor is adjusted in order to obtain a subsequent digital image having a different scene brightness range. The plurality of digital images are stored, and subsequently the stored digital images are processed to generate a plurality of composite images, each having an extended dynamic range greater than any of the digital images by themselves. The plurality of composite images are used in producing an extended range panorama. In addition, light attenuation data may be stored with the images for subsequent reconstruction of higher bit-depth panorama than the original panorama.

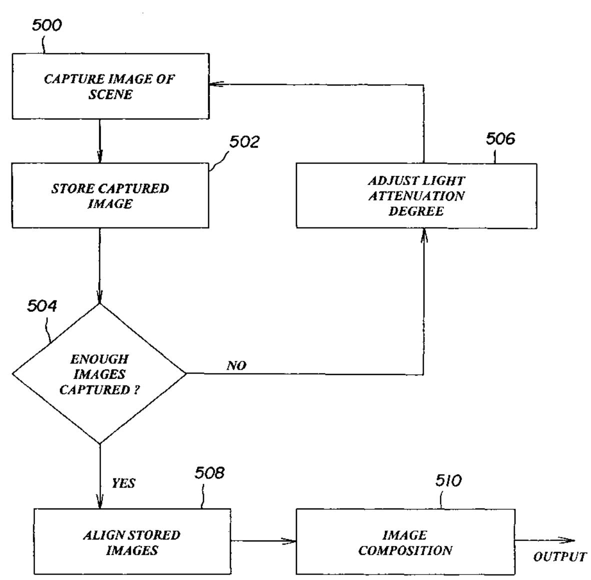


FIG. 5

EP 1 422 660 A2

## Description

The present invention relates to the field of digital image processing and, in particular, to capturing and digitally processing an extended dynamic range panoramic image.

With advances in digital imaging technology over the last decade, innovative use of real photographs has been emerging in various ways, such as the creation of panoramic views of a real-world scene from multiple photographs in order to provide the viewer with an encompassing, photorealistic virtual reality. One standard method by which such panoramic views are created is by placing a conventional digital camera on a tripod, capturing images from different views by rotating the camera about the vertical axis through the center of the tripod, and stitching together the captured images to form a single large field of view panoramic image. A variety of software packages exist that perform image stitching (for example, QuickTime® VR Authoring Studio by Apple Computer, Inc., Live Picture by MGI Software Corporation, and Stitcher® by REALVIZ®), and many of these packages address some of the typical associated problems. Such problems include the presence of lens distortion, perspective distortion, unknown focal length, parallax errors if the images were not captured on a tripod, and exposure differences if the images were not captured with identical exposure settings.

Specifically with regard to the problem of exposure differences between captured images, MGI Software offers a potential solution. In U.S. Patent 6,128,108, assigned to MGI Software, Teo describes a method of combining two overlapping images, wherein the code values of one or both images are adjusted by a nonlinear optimization procedure so that the overall brightness, contrast and gamma factors of both images are similar. However, Teo's method suffers in situations where each captured image has already been optimally rendered into a form suitable for hardcopy output or softcopy display. In this case, the nonlinear optimization procedure will adjust these optimal characteristics, generating a sub-optimally rendered panoramic image.

Another technique for correcting exposure differences that generates a panoramic image that can be optimally rendered is described in commonly assigned, co-pending U.S. Patent Application Serial No. 10/008,026, entitled "Method and System for Compositing Images" and filed November 5, 2001, and which is incorporated herein by reference. In this technique, two overlapping images are first transformed by a metric transform. A metric transform refers to a transformation that is applied to the pixel values of a digital image, the transformation yielding transformed pixel values that are linearly or logarithmically related to scene intensity values. An example of a color space that is logarithmically related to scene intensity values is the nonlinearly encoded Extended Reference Input Medium Metric (ERIMM) (PIMA standard #7466, found at http://www.pima.net/standards/it10/IT10 POW.htm on the World Wide Web). Once the metric transform has been applied, the pixel values of at least one of the images are modified by a linear exposure transform so that the pixel values in the overlap regions of overlapping images are similar, yielding a set of adjusted images. The adjusted images are then combined by a feathering scheme, weighted averages, or some other blending technique known in the art, to form a composite image. The composite image can then be optionally transformed back into the original color space.

In both of the aforementioned methods for correcting exposure differences, another problem exists; namely, if the exposure differences between two or more images are too drastic, any adjustment may force certain areas of the panoramic images to clip at the lower or higher ends of the dynamic range of the image sensor. For an example of such a drastic scenario, consider that 8-bit images are captured outside with the camera in auto exposure mode. Furthermore, consider that at one position the camera points so that a bright region occupies the left side of the image and a tree occupies the right side of the image. The camera is rotated to a second position, where the same tree now occupies the left side of the image, and a shadow area occupies the right side of the image. The auto exposure mode of the camera will attempt to bring the bright areas and shadow areas to within the dynamic range of the camera, thus reducing the exposure of the tree in the first image relative to the exposure of the tree in the second image When the exposures are adjusted for subsequent stitching purposes, the adjustment step must either increase the exposure of the first image, or decrease the exposure of the second image, or both, in order to match the exposures in the overlapping region (the tree). This adjustment will likely push either the bright region or the shadow region or both outside of the 8-bit range, and clipping will occur.

In order to solve the clipping problem, a number of potential solutions have been proposed. For example, in "Generalized Mosaicing," published in *Proceedings of International Conference on Computer Vision,* 2001, Schechner and Nayar teach a method of attaching an optical filter with spatially varying transmittance to a digital camera to effectively measure each scene point with different exposures when the camera moves. With this method, an extended dynamic range panorama of the scene can be built upon the multiple measurements.

In "High Dynamic Range Panoramic Imaging," published in *Proceedings of International Conference on Computer Vision,* 2001, Aggarwal and Ahuja teach a method to generate an extended dynamic range panorama of a scene. The method involves placing a graded transparency (mask) in front of the camera sensor that allows every scene point to be imaged under multiple exposure settings as the camera pans. This process is required to capture large fields of view at high resolution. The sequence of images is then stitched to construct a high resolution, extended dynamic

range panoramic image.

Both of these methods adopt a fixed transmittance attenuation pattern to all scenes regardless of the actual brightness, although the pattern itself varies spatially. Also, for each scene point, there are, effectively, more measurements performed than what are needed. In order for each scene point to be exposed in the same transmittance variation pattern, a careful calibration between the speed of camera panning and camera frame capture rate has to be performed. Moreover, neither method teaches how to generate a high bit-depth panorama in the process of building an extended dynamic range panoramic image.

One existing camera system is capable of generating both extended dynamic range and high bit-depth images by using a simple attachment that can be added to a conventional low bit-depth electronic camera. In commonly assigned, co-pending U.S. Patent Application Serial No. 10/193,342, entitled "Method and Apparatus for Generating Images Used in Extended Range Image Composition" and filed July 11, 2002, and which is incorporated herein by reference, Chen et. al. describe a method for generating such an extended dynamic range and high bit-depth image that has the advantages that it does not change camera optimal charge transfer efficiency (CTE), use multiple sensors and mirrors, or adversely affect the image resolution.

What is needed in the art, therefore, is a method for building an extended dynamic range panoramic image and a high bit-depth panorama from a sequence of photographs of a scene.

The present invention is directed to overcoming one or more of the problems set forth above. Briefly summarized, the invention resides in a method of obtaining an extended dynamic range panorama of a scene from a plurality of limited dynamic range images captured by an image sensor in a digital camera. The method includes the steps of: (a) from a first position, capturing a first plurality of digital images comprising image pixels of the scene by exposing the image sensor to light transmitted from the scene as observed from the first position, wherein light transmittance upon the image sensor is adjustable; (b) evaluating each image after it is captured for an illumination level exceeding the limited dynamic range of the image at either a higher or a lower end of the dynamic range for at least some of the image pixels; (c) based on the evaluation of each image exceeding the limited dynamic range, adjusting the light transmittance upon the image sensor in order to obtain a subsequent digital image having a different scene brightness range; (d) storing the first plurality of digital images; (e) processing the stored digital images to generate a first composite image having an extended dynamic range greater than any of the digital images by themselves; (f) from a second position, capturing a second plurality of digital images comprising image pixels of the scene by exposing the image sensor to light transmitted from the scene as observed from the second position, and then repeating the steps (b) through (e) for the second plurality of images to generate a second composite image; and (g) processing the first and second composite images to generate an extended dynamic range panorama image.

According to another aspect of the invention, a high bit depth panorama of a scene is obtained from a plurality of high bit depth images converted from a plurality of images of lower bit depth captured by an image sensor in a digital camera, where the lower bit depth images also comprise lower dynamic range images. This method includes the steps of: (a) from a first position, capturing a first plurality of digital images of lower bit depth comprising image pixels of the scene by exposing the image sensor to light transmitted from the scene as observed from the first position, wherein light transmittance upon the image sensor is variably attenuated for at least one of the images; (b) evaluating each image after it is captured for an illumination level exceeding the limited dynamic range of the image for at least some of the image pixels; (c) based on the evaluation of each image exceeding the limited dynamic range, adjusting the light transmittance upon the image sensor in order to obtain a subsequent digital image having a different scene brightness range; (d) calculating an attenuation coefficient for each of the images corresponding to the degree of attenuation for each image; (e) storing data for the reconstruction of one or more high bit depth images from the low bit depth images, said data including the first plurality of digital images and the attenuation coefficients; (f) processing the stored data to generate a first composite image having a higher bit depth than any of the digital images by themselves; (g) from a second position, capturing a second plurality of digital images of lower bit depth comprising image pixels of the scene by exposing the image sensor to light transmitted from the scene as observed from the second position, and then repeating the steps (b) through (f) on the second plurality of images to generate a second composite image; and (h) processing the first and second composite images to generate a panorama image having a higher bit depth.

In both embodiments, steps (f) and (g), respectively, may be repeated for one or more additional positions to accordingly generate one or more additional composite images, and the extended dynamic range panorama image is generated in the final step from the first and second, and the one or more additional, composite images.

The advantage of this invention is the ability to convert a conventional low-bit depth electronic camera (e.g., having an electronic sensor device) to an extended dynamic range panorama imaging device without changing camera optimal charge transfer efficiency (CTE), or having to use multiple sensors and mirrors, or affecting the image resolution. Furthermore, by varying the light transmittance upon the image sensor for a group of images in order to obtain a series of different scene brightness ranges, an attenuation factor may be calculated for the images. The attenuation factor represents additional image information that can be used together with image data (low bit-depth data) to further characterize the bit-depth of the images, thereby enabling the generation of high-bit depth panorama images from a low

bit-depth device.

These and other aspects, objects, features and advantages of the present invention will be more clearly understood and appreciated from a review of the following detailed description of the preferred embodiments and appended claims, and by reference to the accompanying drawings.

FIG. 1A is a perspective view of a first embodiment of a camera for generating images used in extended dynamic range image composition according to the invention.
FIG. 1B is a perspective view of a second embodiment of a camera for generating images used in extended dynamic range image composition according to the invention.
FIG. 2 is a perspective view taken of the rear of the cameras shown in Figures 1A and 1B.
FIG. 3 is a block diagram of the relevant components of the cameras shown in Figures 1A and 1B.
FIG. 4 is a diagram of the components of a liquid crystal variable attenuator used in the cameras shown in Figures 1A and 1B.
FIG. 5 is a flow diagram of a presently preferred embodiment for extended range composition according to the present invention.
FIG. 6 is a flow diagram of a presently preferred embodiment of the image alignment step shown in Figure 5 for correcting unwanted motion in the captured images.
FIG. 7 is a flow diagram of a presently preferred embodiment of the automatic adjustment step shown in Figure 5 for controlling light attenuation.
FIG. 8 is a diagrammatic illustration of an image processing system for performing the alignment correction shown in Figures 5 and 6.
FIG. 9 is a pictorial illustration of collected images with different illumination levels and a composite image.
FIG. 10 is a flow chart of a presently preferred embodiment for producing recoverable information in order to generate a high bit-depth image from a low bit-depth capture device.
FIGS. 11(A), 11(B) and 11(C) are histograms showing different intensity distributions for original scene data, and for the scene data as captured and processed according to the prior art and according to the invention.
FIG. 12 is a view of an embodiment three positions of a camera for generating panoramas used in extended dynamic range panorama composition according to the invention.
FIG. 13 is a pictorial illustration of collected images with different illumination levels at different positions.
FIG. 14 is a pictorial illustration of composite images.
FIG. 15 is a flow chart of a presently preferred embodiment for composting images.

Because imaging devices employing electronic sensors are well known, the present description will be directed in particular to elements forming part of, or cooperating more directly with, a method and a system in accordance with the present invention. Elements not specifically shown or described herein may be selected from those known in the art. Certain aspects of the embodiments to be described may be provided in software. Given the method and system as shown and described according to the invention in the following materials, software not specifically shown, described or suggested herein that is useful for implementation of the invention is conventional and within the ordinary skill in such arts.

The present invention describes a method and a system for building an extended dynamic range panoramic image and a high bit-depth panorama by converting a conventional low-bit depth electronic camera (e.g., having a CCD sensor device) to a extended dynamic range imaging device, without changing camera optimal charge transfer efficiency (CTE), by attaching a device known as a variable attenuator and limited additional electronic circuitry to the camera system, and by applying digital image processing methods to the acquired images. Optical devices that vary light transmittance are commercially available. Meadowlark Optics manufactures an assortment of these devices known as Liquid Crystal Variable Attenuators. The liquid crystal variable attenuator offers real-time continuous control of light intensity. Light transmission is maximized by applying the correct voltage to achieve half-wave retardance from the liquid crystal. Transmission decreases as the applied voltage amplitude increases.

Any type of single sensor method of capturing a collection of images that are used to form a extended dynamic range image necessarily suffers from unwanted motion in the camera or scene during the time that the collection of images is captured. Therefore, the present invention furthermore describes a method of generating a extended dynamic range image by capturing a collection of images using a single CCD sensor camera with an attached Liquid crystal variable attenuator, wherein subsequent processing according to the method corrects for unwanted motion in the collection of images.

In addition, the present invention teaches a method that uses a low bit-depth device to generate extended dynamic range images (low bit-depth images), and at the same time, produces recoverable information to be used to generate high bit-depth images, that, in turn, are used to generate a high bit depth panorama.

FIGS. 1A, 1B and 2 show several related perspective views of camera systems useful for generating images

used in extended dynamic range panorama composition according to the invention. Each of these figures illustrate a camera body **104**, a lens **102**, a liquid crystal variable attenuator **100**, an image capture switch **318** and a manual controller **322** for the attenuator voltage. The lens **102** focuses an image upon an image sensor **308** inside the camera body **104** (e.g., a charge coupled device (CCD) sensor), and the captured image is displayed on a light emitting diode (LED) display **316** as shown in Figure 2. A menu screen **210** and a menu selector **206** are provided for selecting camera operation modes.

The second embodiment for a camera as shown in Figure 1B illustrates the variable attenuator **100** as an attachment placed in an optical path **102A** (see Figure 3) of the camera. To enable attachment, the variable attenuator **100** includes a threaded section **100A** that is conformed to engage a corresponding threaded section on the inside **102B** of the lens barrel of the lens **102**. Other forms of attachment, such as a bayonet attachment, may be used. The objective of an attachment is to enable use of the variable attenuator with a conventional camera; however, a conventional camera will not include any voltage control circuitry for the variable attenuator. Consequently, in this second embodiment, the manual controller **322** is located on a power atttachment **106** that is attached to the camera, e.g., by attaching to a connection on the bottom plate of the camera body **104**. The variable attenuator **100** and the power attachment **106** are connected by a cable **108** for transmitting power and control signals therebetween. (The cable **108** would typically be coupled, at least on the attenuator end of the connection, to a cable jack (not shown) so that the attenuator **100** could be screwed into the lens **102** and then connected to the cable **108**.)

Referring to the block diagram of Figure 3, a camera system used for generating images for extended dynamic range panorama composition is generally designated by a reference character **300**. The camera system **300** includes the body **104**, which provides the case and chassis to which all elements of the camera system **300** are firmly attached. Light from an object **301** enters the liquid crystal variable attenuator **100**, and the light exiting the attenuator **100** is then collected and focused by the lens **102** through an aperture **306** upon the CCD sensor **308**. In the CCD sensor **308**, the light is converted into an electrical signal and applied to an amplifier **310**. The amplified electrical signal from the amplifier **310** is digitized by an analog to digital converter **312**. The digitized signal is then processed in a digital processor **314** so that it is ready for display or storing.

The signal from the digital processor **314** is then utilized to excite the LED display **316** and produce an image on its face which is a duplicate of the image formed at the input face of the CCD sensor **308**. Typically, a brighter object in a scene causes a corresponding portion of the CCD sensor **308** to become saturated, thereby producing a white region without any, or at least very few, texture details in the image shown on the display face of the LED display **316**. The brightness information from at least the saturated portion is translated by the processor **314** into a voltage change on a line **330** that is processed by an auto controller **324** and applied as voltage **333** through a gate **328** to the liquid crystal variable attenuator **100**. Alternatively, the manual controller **322** may produce a voltage change that is applied through the gate **328** to the liquid crystal variable attenuator **100**.

Referring to FIG. 4, the liquid crystal variable attenuator **100** comprises a liquid crystal variable retarder **404** operating between two crossed linear polarizers: an entrance polarizer **402** and an exit polarizer **406**. Such a liquid crystal variable attenuator is available from Meadowlark Optics, Frederick, Colorado. With crossed polarizers, light transmission is maximized by applying a correct voltage **333** to the retarder **404** to achieve half-wave retardance from its liquid crystal cell, as shown in FIG. 4. An incoming unpolarized input light beam **400** is polarized by the entrance polarizer **402**. Half-wave operation of the retarder **404** rotates the incoming polarization direction by 90 degrees, so that light is passed by the exit polarizer **406**. Minimum transmission is obtained with the retarder **404** operating at zero waves.

Transmission decreases as the applied voltage **333** increases (from half to zero waves retardance). A relationship between transmittance T and retardance δ (in degrees) for a crossed polarizer configuration is given by

$$T(\delta) = \frac{1}{2}[1-\cos(\delta)]T_{max} \quad (1)$$

where $T_{max}$ is a maximum transmittance when retardance is exactly one-half wave (or 180 degrees). The retardance δ (in degrees) is a function of an applied voltage $V$ and could be written as $\delta = f(V)$, where function $f$ can be derived from the specifications of the attenuator **100** or determined through experimental calibrations. With this relationship, Equation (1) is re-written as

$$T(\delta) = \frac{1}{2}[1-\cos(f(V))]T_{max} \quad (2)$$

Next, define a transmittance attenuation coefficient $\Re = T(\delta) / T_{max}$ From Equation (2), it is known that the transmittance attenuation coefficient $\Re$ is a function of $v$ and can be expressed as

$$\Re(v) = \frac{1}{2}[1 - \cos(f(V))] \qquad (3)$$

The transmittance attenuation coefficient $\Re(V)$ defined here is to be used later in an embodiment describing how to recover useful information to generate high bit-depth images. The values of $\Re(V)$ can be pre-computed off-line and stored in a look up table (LUT) in the processor **314**, or computed in real time in the processor **314**.

Maximum transmission is dependent upon properties of the liquid crystal variable retarder **404** as well as the polarizers **402** and **406** used. With a system having a configuration as shown in FIG. 4, the unpolarized light source **400** exits at the exit polarizer **406** as a polarized light beam **408**. The camera system **300** is operated in different modes, as selected by the mode selector **206**. In a manual control mode, a voltage adjustment **333** is sent to the gate **328** from the manual controller **322**, which is activated and controlled by a user if there is a saturated portion in the displayed image. Accordingly, the attenuator **100** produces a lower light transmittance, therefore, reducing the amount of saturation that the CCD sensor **308** can produce. An image can be captured and stored in a storage **320** through the gate **326** by closing the image capture switch **318**, which is activated by the user.

In a manual control mode, the user may take as many images as necessary for extended dynamic range image composition, depending upon scene illumination levels. In other words, an arbitrary dynamic range resolution can be achieved. For example, a saturated region of an area $B_1$ can be shrunk to an area $B_2$, (where $B_2 \leq B_1$ ), by adjusting the controller **322** so that the transmittance $T_1$ (δ) of the light attenuator **100** is set to an appropriate level. A corresponding image $I_1$ is stored for that level of attenuation. Likewise, the controller **322** can be adjusted a second time so that the transmittance $T_2(\delta)$ of the light attenuator **100** causes the spot $B_2$ in the display **316** to shrink to $B_3$ (where $B_3 \leq B_2$). A corresponding image $I_2$ is stored for that level of luminance. This process can be repeated for N, $B_N$=0, or until minimum transmittance is attained by the light attenuator.

In an automatic control mode, when the processor **314** detects saturation and provides a signal on the line **330** to the auto controller **324**, the controller **324** generates a voltage adjustment **333** that is sent to the gate **328**. Accordingly, the attenuator **100** produces a lower light transmittance, thereby reducing the amount of saturation that the CCD sensor **308** can produce. The resulting image is applied to the storage **320** through the gate **326** upon a signal from the auto controller **324**, and the image is stored in the storage **320**. The detection of saturation by the digital processor **314** and the auto controlling process performed by the auto controller **324** are explained below.

In the auto mode, the processor **314** checks an image to determine what ratio of the number of pixels have an intensity level exceeding a preprogrammed threshold $T_V$. An exemplary value $T_V$ is 240.0. If there are pixels whose intensity levels exceed $T_V$, and if the ratio, $R$ , is greater than a preprogrammed threshold $T_N$, where $R$ is the ratio of the number of pixels whose intensity levels exceed $T_V$ to the total number of pixels of the image, then the processor **314** generates a non-zero value signal that is applied to the auto controller **324** through line **330**. Otherwise, the processor **314** generates a zero value that is applied to the auto controller **324.** An exemplary value for the threshold $T_N$ is 0.01. Upon receiving a non-zero signal, the auto controller **324** increases an adjustment voltage $V$ by an amount of $\delta_V$. The initial value for the adjustment voltage $V$ *is* $V_{\min}$ . The maximum allowable value of $V$ *is* $V_{\max}$ . The value of $\delta_V$ can be easily determined based on how many attenuation levels are desired and the specification of the attenuator. An exemplary value of $\delta_V$ is 0.5 volts. Both $V_{\min}$ and $V_{\max}$ are values that are determined by the specifications of the attenuator. An exemplary value of $V_{\min}$ is 2 volts and an exemplary value of $V_{\max}$ is 7 volts.

Figure 7 shows the process flow for an automatic control mode of operation. In the initial state, the camera captures an image (step **702**), and sets the adjustment voltage $V$ to $V_{min}$ (step **704**). In step **706**, the processor **314** checks the intensity of the image pixels to determine if there is a saturation region (where pixel intensity levels exceed $T_V$) in the image and checks the ratio $R$ to determine if $R > T_N$ where $R$ is the aforementioned ratio of the number of pixels whose intensity levels exceed $T_V$ to the total number of pixels of the image. If the answer is 'No', the processor **314** saves the image to storage **320** and the process stops at step **722.** If the answer is 'Yes', the processor **314** saves the image to storage **320** and increases the adjustment voltage $V$ by an amount of $\delta_V$ (step **712).** In step **714,** the processor **314** checks the feedback **332** from the auto controller **324** to see if the adjustment voltage $V$ is less than $V_{\max}$. If the answer is 'Yes', the processor **314** commands the auto controller **324** to send the adjustment voltage $V$ to the gate **328**. Another image is then captured and the process repeats. If the answer from step 714 is 'No', then the process stops.

It is understood that the above discussed light transmittance adjustment procedures for recovering higher end (bright) saturated pixels are applicable to recovering lower end clipped pixels by altering the parameters and formulations used in the procedures accordingly.

Referring to Figure 12, there is an exemplary operation showing a camera system (**300**) used for generating an extended dynamic range panorama moving from a first position **1202**, to a second position **1204**, then to a third position **1206**. At each of these positions, the camera system **300** takes one or more images according to the above

descriptions. Exemplary images are shown in Figure 13. In the first position, the camera system **300** takes three images: image $I_1^1$ (**1302**), image $I_2^1$ **(1303)** and image $I_3^1$ **(1304),** where the superscript signifies the position of the camera. In the second position, the camera system **300** takes two images: image $I_1^2$ **(1306),** and image $I_2^2$ **(1307).** In the third position, the camera system **300** takes three images: image $I_1^3$ **(1308),** image $I_2^3$ **(1309)** and image $I_3^3$ **(1310).** These images are stored in storage **320**.

Images collected in the storage **320** in the camera **300** are further processed for alignment and composition in an image processing system as shown in Figure 8.

Referring to Figure 8, the digital images from the digital image storage **320** are provided to an image processor **802**, such as a programmable personal computer, or a digital image processing work station such as a Sun Sparc workstation. The image processor **802** may be connected to a CRT display **804**, an operator interface such as a keyboard **806** and a mouse **808**. The image processor **802** is also connected to a computer readable storage medium **807**. The image processor **802** transmits processed digital images to an output device **809**. The output device **809** can comprise a hard copy printer, a long-term image storage device, a connection to another processor, or an image telecommunication device connected, for example, to the Internet. The image processor **802** contains software for implementing the process of image alignment and composition, which is explained next.

As previously mentioned, the preferred system for capturing multiple images at a specific position to form a extended dynamic range image does not capture all images simultaneously, so any unwanted motion in the camera or scene during the capture process will cause misalignment of the images. Correct formation of an extended dynamic range image assumes the camera is stable, or not moving, and that there is no scene motion during the capture of the collection of images. If the camera is mounted on a tripod or a monopod, or placed on top of or in contact with a stationary object, then the stability assumption is likely to hold. However, if the collection of images is captured while the camera is held in the hands of the photographer, the slightest jitter or movement of the hands may introduce stabilization errors that will adversely affect the formation of the extended dynamic range image.

The process of removing any unwanted motion from a sequence of images captured when the camera is at a specific position is called image stabilization. Some systems use optical, mechanical, or other physical means to correct for the unwanted motion at the time of capture or scanning. However, these systems are often complex and expensive. To provide stabilization for a generic digital image sequence, several digital image processing methods have been developed and described in the prior art.

A number of digital image processing methods use a specific camera motion model to estimate one or more parameters such as zoom, translation, rotation, etc. between successive frames in the sequences. These parameters are computed from a motion vector field that describes the correspondence between image points in two successive frames. The resulting parameters can then be filtered over a number of frames to provide smooth motion. An example of such a system is described in U.S. Patent No. 5,629,988, entitled "System and Method for Electronic Image Stabilization" and issued May 13, 1997 in the names of Burt et al, and which is incorporated herein by reference. A fundamental assumption in these systems is that a global transformation dominates the motion between adjacent frames. In the presence of significant local motion, such as multiple objects moving with independent motion trajectories, these methods may fail due to the computation of erroneous global motion parameters. In addition, it may be difficult to apply these methods to a collection of images captured with varying exposures because the images will differ dramatically in overall intensity. Only the information contained in the phase of the Fourier Transform of the image is similar.

Other digital image processing methods for removing unwanted motion make use of a technique known as phase correlation for precisely aligning successive frames. An example of such a method has been reported by Eroglu et al. (in "A fast algorithm for subpixel accuracy image stabilization for digital film and video," *Proc. SPIE Visual Communications and Image Processing,* Vol. 3309, pp. 786 - 797, 1998). These methods would be more applicable to the stabilization of a collection of images used to form a extended dynamic range image because the correlation procedure only compares the information contained in the phase of the Fourier Transform of the images.

FIG. 5 shows a flow chart of a system that unifies the previously explained manual control mode and auto control mode, and which includes the process of image alignment and composition. This system is capable of capturing, storing, and aligning a collection of images, where each image corresponds to a distinct luminance level. In this system, the extended dynamic range camera **300** is used to capture (step **500**) an image of the scene. This captured image corresponds to the first luminance level, and is stored (step **502**) in memory. A query **504** is made as to whether enough images have been captured to form the extended dynamic range image. A negative response to query **504** indicates that the degree of light attenuation is changed (step **506**) e.g., by the auto controller **324** or by user adjustment of the manual controller **322**. The process of capturing (step **500**) and storing (step **502**) images corresponding to different luminance levels is repeated until there is an affirmative response to query **504**. An affirmative response to query **504** indicates that all images have been captured and stored, and the system proceeds to the step **508** of aligning the stored images. It should be understood that in the manual control mode, steps **504** and **506** represent actions including manual voltage adjustment and the user's visual inspection of the result. In the auto control mode, steps **504** and **506** represent actions including automatic image saturation testing, automatic voltage adjustment, automatic voltage limit

testing, *etc.,* as stated in previous sections. Also, step **502** stores images in the storage **320.**

Referring now to Figure 6, an embodiment of the step **508** of aligning the stored images is described. During the step **508** of aligning the stored images **600,** the translational difference $T_{j,j+1}$ (a two element vector corresponding to horizontal and vertical translation) between $I_j$ and $I_{j+1}$ is computed by phase correlation **602** (as described in the aforementioned Eroglu reference, or in C. Kuglin and D. Hines, "The Phase Correlation Image Alignment Method", *Proc. 1975 International Conference on Cybernetics and Society,* pp. 163-165, 1975.) for each integral value of *j* for 1 $\leq j \leq N - 1$, where *N* is the total number of stored images. The counter *i* is initialized (step **604)** to one, and image $I_{i+1}$ is shifted (step **606),** or translated by

$$-\sum_{k=1}^{i} \mathbf{T}_{k,k+1} .$$

This shift corrects for the unwanted motion in image $I_{i+1}$ found by the translational model. A query **608** is made as to whether $i = N-1$. A negative response to query **608** indicates that *i* is incremented (step **610**) by one, and the process continues at step **606**. An affirmative response to query **608** indicates that all images have been corrected (step **612**) for unwanted motion, which completes step **508**.

Figure 9 shows exemplary contents of three images taken when the camera **300** is at the first position as shown in Figure 13. The first image, $I_1^1$, **902** is taken before manual or automatic light attenuation adjustment, the second image, $I_2^1$, **904** is taken after a first manual or automatic light attenuation adjustment, the third image, $I_3^1$, **906** is taken after a second manual or automatic light attenuation adjustment. It should be understood that Figure 9 only shows an exemplary set of images; the number of images (or adjustment steps) in a set could be, in theory, any positive integer. The first image **902** has a saturated region $B_1$ (**922**). The second image **904** has a saturated region $B_2$ **(924),** (where $B_2 < B_1$). The third image **906** has no saturated region. Figure 9 shows a pixel **908** in the image **902,** a pixel **910** in image **904,** and a pixel **912** in the image **906.** The pixels **908**, **910**, and **912** are aligned in the aforementioned image alignment step. Figure 9 shows that pixels **908**, **910**, and **912** reflect different illumination levels. The pixels **908, 910,** and **912** are used in composition to produce a value for a composite image, $I_C^1$, **942** at location **944.** Image $I_C^1$ is also shown in Figure 14 as **1410.** Accordingly, using the same procedure, at the second position, a composite image $I_C^2$ **(1412)** is generated from image $I_1^2$ (**1306**) and image $I_2^2$ **(1307);** at the third position, a composite image $I_C^3$ (**1414**) is generated from image $I_1^3$ (**1308**), image $I_2^3$ (**1309**) and image $I_3^3$ **(1310).**

The process of producing a value for a pixel in a composite image can be formulated as a robust statistical estimation Handbook for Digital Signal Processing by Mitra Kaiser, 1993). Denote a set of pixels (e.g. pixels **908, 910,** and **912**) collected from *N* aligned images by $\{p_i\}$, $i \in [1,\Lambda\ N]$. Denote an estimation of a composite pixel in a composite image corresponding to set $\{p_i\}$ by $p_{est}$. The computation of $p_{est}$ is simply

$$p_{est} = \underset{i}{median}\{p_i\}, i \in [j_1, j_1 + 1\Lambda\ , N - j_2 - 1, N - j_2]$$

where $j_1 \in [0,\Lambda\ N]$, $j_2 \in [0,\Lambda\ N]$, subject to $0 < j_1 + j_2 < N$. This formulation gives a robust estimation by excluding outliers (e.g. saturated pixels or dark pixels). This formulation also provides flexibility in selecting unsymmetrical exclusion boundaries, $j_1$ and $j_2$ . Exemplary selections are $j_1 = 1$ and $j_2 = 1$.

The described robust estimation process is applied to every pixel in the collected images to complete the step **510** in Figure 5. For the example scene intensity distribution shown in Fig. 11 (A), a histogram of intensity levels of the composite image using the present invention is predicted to be like a curve **1156** shown in Fig. 11 (C) with a range of 0 **(1152)** to 255 **(1158).** Note that the intensity distribution **1156** has a shape similar to intensity distribution curve **1116** of the original scene (Fig. 11(A)). However, as can be seen, the intensity resolution has been reduced from 1024 levels to 256 levels. In contrast, however, without the dynamic range correction provided by the invention, the histogram of intensity levels would be as shown in Fig. 11(B), where considerable saturation is evident.

Fig. 10 shows a flow chart corresponding to a preferred embodiment of the present invention for producing recoverable information that is to be used to generate a high bit-depth image from a low bit-depth capture device. In its initial state, the camera captures a first image in step **1002**. In step **1006**, the processor **314** (automatic mode) or the user (manual mode) queries to see if there are saturated pixels in the image. If the answer is negative, the image is saved and the process terminates (step **1007**). If the answer is affirmative the process proceeds to step **1008**, which determines if the image is a first image. If the image is a first image, the processor **314** stores the positions and intensity values of the unsaturated pixels in a first file. If the image is other than a first image or after completion of step **1009**, the locations of the saturated pixels are temporarily stored (step **1010**) in a second file. The attenuator voltage is

adjusted either automatically (by the auto controller **324** in Fig. 3) or manually (by the manual controller **322** in Fig. 3) as indicated in step **1011**. Adjustment and checking of voltage limits are carried out as previously described.

After the attenuator voltage is adjusted, the next image is captured, as indicated in step **1016**, and this new image becomes the current image. In step **1018**, the processor **314** stores positions and intensity levels in the first file of only those pixels whose intensity levels were saturated in the previous image but are unsaturated in the current image. The pixels are referred to as "de-saturated" pixels. The processor **314** also stores the value of the associated transmission attenuation coefficient $\Re(V)$ defined in Equation (3). Upon completion of step **1018**, the process loops back to step **1006** where the processor **314** (automatic mode) or user (manual mode) checks to see if there are any saturated pixels in the current image. The steps described above are then repeated.

The process is further explained using the example images in Fig. 13. In order to better understand the process, it is helpful to define several general terms. Let $I_i^k$ denote a captured image at position *k,* possibly having saturated pixels, where $i \in \{1,\Lambda ,M^k\}$ and $M^k$ is the total number of captured images $M^k \geq 1$. All captured images are assumed to contain the same number of pixels *N* and each pixel in a particular image $I_i^k$ at position *k* is identified by an index *n*, where $n \in \{1,\Lambda , N\}$. It is further assumed that all images are mutually aligned to one another so that a particular value of pixel index n refers to a pixel location, which is ndependent of $I_i^k$. The Cartesian co-ordinates associated with pixel *n* are denoted $(x_n, y_n)$ and the intensity level associated with this pixel in image $I_i^k$ at position *k* is denoted $P_i^k(x_n, y_n)$. The term

$$S_i^k = \{n_{i1},\Lambda , n_{ij},\Lambda ,n_{iJ_i^k}\}$$

refers to the subset of pixel indexes corresponding to saturated pixels in image $I_i^k$. The subscript $j \in \{1,\Lambda , , J_i^k\}$ is associated with pixel index $n_{ij}$ in this subset where $J_i^k > 0$ is the total number of saturated pixels in image $I_i^k$. The last image $I_{M^k}^k$ is assumed to contain no saturated pixels. Accordingly, $S_{M^k}^k = NULL$ is an empty set for this image. Although the last assumption does not necessarily always hold true, it can usually be achieved in practice since the attenuator can be continuously tuned until the transmittance reaches a very low value. In any event, the assumption is not critical to the overall method as described herein.

Referring now to Fig. 9, the exemplary images having saturated regions are the first image **902,** denoted by $I_1^1$ and the second image **904,** denoted by $I_2^1$. An exemplary last image $I_3^1$ in Fig. 9 is the third image **906.** Exemplary saturated sets are the region **922,** denoted by $S_1^1$, and the region **924,** denoted by $S_2^1$ . According to the assumption mentioned in the previous paragraph, $S_3^1 = NULL$.

After the adjustment of the attenuator control voltage *V* and after capturing a new current image at position *k,* image $I_{i+1}^k$ (i.e., steps **1011** and **1016,** respectively, in Fig. 10), the processor **314** retrieves the locations of saturated pixels in image $I_i^k$ at position *k* that were temporarily stored in the second file. In step **1018** it checks to see if pixel $n_{ij}$ at location $(x_{nij} ,y_{nij})$ has become de-saturated in the new current image. If de-saturation has occurred for this pixel, the new intensity level $P_{i+1}^k$, $(x_{nij}, y_{nij})$ and the position $(x_{nij}, y_{nij})$ are stored in the first file along with the value of the associated attenuation coefficient, $\Re_{i+1}^k(V)$. The process of storing information on de-saturated pixels starts after a first adjustment of the attenuator control voltage and continues until a last adjustment is made.

Referring back to the example in Fig. 9 in connection with the process flow diagram shown in Figure 10, locations and intensities of unsaturated pixels of the first image **902** are stored in the first storage file (step **1009**). The locations of saturated pixels in the region **922** are stored temporarily in the second storage file (step **1010**). The second image **904** is captured (step 1016) after a first adjustment of the attenuator control voltage (step **1011**). The processor **314** then retrieves from the second temporary storage file the locations of saturated pixels in the region **922** of the first image **902**. A determination is made automatically by the processor or manually by the operator to see if pixels at these locations have become de-saturated in the second image **904**. The first storage file is then updated with the positions and intensities of the newly de-saturated pixels (step **1018**). For example, pixel **908** is located in the saturated region **922** of the first image. This pixel corresponds to pixel **910** in the second image **904**, which lies in the de-saturated region **905** of the second image **904**. The intensities and locations of all pixels in the region **905** are stored in the first storage file along with the transmittance attenuation factor $\Re_2^k(V)$ . The process then loops back to step **1006.** Information stored in the second temporary storage file is replaced by the locations of saturated pixels in the region **924** in the second image **904** (step **1010**). A second and final adjustment of attenuator control voltage is made (step **1011**) followed by the capture of the third image **906** (step **1016**). Since all pixels in the region **924** have become newly de-saturated in the example, the first storage file is updated (step **1018)** to include the intensities and locations of all pixels in this region along with the transmittance attenuation factor $\Re_3^k(V)$ . Since there are no saturated pixels in the third image **906,** the process terminates (steps **1007)** after the process loops back to step **1006**. It will be appreciated that only one attenuation coefficient needs to be stored for each adjustment of the attenuator control voltage, that is, for each new set of de-saturated pixels. The above described process is applied *to k* sets of images, where $k \in [1,...,K]$, and

*K* is the number of positions where the moving camera stops and takes images.

Equation (4) expresses a piece of pseudo code describing this process at *K* positions. In Equation (4), *i* is the image index, *n* is the pixel index, $(x_n, y_n$ are the Cartesian co-ordinates of pixel *n*, $P_i^k(x_n, y_n)$ is the intensity in image $I_i^k$, at the position *k* associated with pixel *n*, and $n_{ij}$ is the index associated with the *j*th saturated pixel in image $I_i^k$.

$$
\begin{array}{l}
for\quad (k=1;\quad k\le K;\quad k++)\{\\
\quad for\quad (n=1;\quad n\le N;\quad n++)\{\\
\quad\quad if\quad (n\notin S_1^k)\{\\
\quad\quad\quad store\quad (x_n,y_n),\quad P_1^k(x_n,y_n),\quad and\quad 1\\
\quad\quad \}\\
\quad \}\\
\quad for\quad (i=1;\quad i\le (M^k-1);\quad i++;)\{\\
\quad\quad for\quad (j=1;\quad j\le J_i^k;\quad j++)\{\\
\quad\quad\quad if\quad (n_{ij}\notin S_{i+1}^k)\{\\
\quad\quad\quad\quad store\quad (x_{n_{ij}},y_{n_{ij}}),\quad P_{i+1}^k(x_{n_{ij}},y_{n_{ij}}),\quad and\quad \Re_{i+1}^k(V)\\
\quad\quad\quad \}\\
\quad\quad \}\\
\quad \}\\
\}
\end{array}
\qquad (4)
$$

Another feature of the present invention is to use a low bit-depth device, such as the digital camera shown in Figures 1, 2 and 3, to generate extended dynamic range panorama (which as discussed to this point are still low bit-depth panorama), and at the same time, produce recoverable information that may be used to additionally generate high bit-depth panorama. This feature is premised on the observation that the attenuation coefficient represents additional image information that can be used together with image data (low bit-depth data) to further characterize the bit-depth of the images.

Having the information stored in Equation (4), it is a straightforward process to generate a high bit-depth image using the stored data. Notice that the exemplary data format in the file is for each row to have three elements: pixel position in Cartesian coordinates, pixel intensity and attenuation coefficient. For convenience, denote the intensity data at position k in the file for each row by $\mathbf{P}^k$, the position data by $\mathbf{X}^k$, and attenuation coefficient by $\Re^k$. Also, denote new intensity data for a reconstructed high bit-depth image (denoted by $\tilde{I}^k$), by $\mathbf{P}_{HIGH}^k$. A simple reconstruction for *K* high bit depth images is shown as

$$
\begin{array}{l}
for\quad k=1;\quad k\le K;\quad k++)\{\\
\quad for\quad (n=1;\quad n\le N;\quad n++)\{\\
\quad\quad \mathbf{P}_{HIGH}^k(\mathbf{X}_n^k)=\mathbf{P}^k(\mathbf{X}_n^k)/\Re_n^k\\
\quad \}\\
\}
\end{array}
\qquad (5)
$$

where $\Re_n$ is either 1 or $\Re(V)$ as indicated by Equation (4).

The method of producing recoverable information to be used to generate a high bit-depth image described with the preferred embodiment can be modified for other types of extended dynamic range techniques such as controlling an integration time of a CCD sensor of a digital camera (see U.S. Patent No. 5,144,442, which is entitled "Wide Dynamic Range Camera" and issued September 1, 1992 in the name of Ran Ginosar et al). In this case, the transmittance attenuation coefficient is a function of time, that is, $\Re(t)$.

The resultant composite images $I_C^k$ are used to generate the extended dynamic panorama of the scene. Note

that every two neighboring two composite images have an overlapping region needed for stitching. An exemplary region is shown in Figure 14. In Figure 14, a part, $I^1_{c0}$(**1420**), of image $I^1_C$ (**1410**) overlaps with a part, $I^2_{C0}$ (**1422**), of image $I^2_C$ (**1412**). In general, the overall brightness and contrast in the overlapping region for two composite images are not the same due to the composite procedure discussed above. To overcome this problem, the transformation method disclosed in the aforementioned U.S. Serial No. 10/008,026, "Method and systems for compositing images" by Cahill *et al.,* is employed, as discussed with respect to the following figure. Alternatively, the transformation method disclosed in the aforementioned U.S. Patent #6,128,108, is employed.

Referring to Figure 15, two source digital images (two neighboring composite images) are provided in step **2200**. The pixel values of at least one of the source digital images are modified **2202** by a linear exposure transform so that the pixel values in the overlap regions of overlapping source digital images are similar, yielding a set of adjusted source digital images. A linear exposure transform refers to a transformation that is applied to the pixel values of a source digital image, the transformation being linear with respect to the scene intensity values at each pixel. The adjusted source digital images are then combined **2204** by a feathering scheme, weighted averages, or some other blending technique known in the art, to form a composite digital image **2206.** After applying this process to all *K* composite images $I^k_C$, the final composite image in step **2206** is the extended dynamic range panorama of the scene.

This same transformation process can be applied to the reconstructed high bit depth image $\tilde{I}^k$ to generate a final high bit depth panorama of the scene.

## Claims

**1.** A method of obtaining an extended dynamic range panorama image of a scene from a plurality of limited dynamic range images captured by an image sensor in a digital camera, said method comprising steps of:

(a) from a first position, capturing a first plurality of digital images comprising image pixels of the scene by exposing the image sensor to light transmitted from the scene as observed from the first position, wherein light transmittance upon the image sensor is adjustable;
(b) evaluating each image after it is captured for an illumination level exceeding the limited dynamic range of the image at either a higher or a lower end of the dynamic range for at least some of the image pixels;
(c) based on the evaluation of each image exceeding the limited dynamic range, adjusting the light transmittance upon the image sensor in order to obtain a subsequent digital image having a different scene brightness range;
(d) storing the first plurality of digital images;
(e) processing the stored digital images to generate a first composite image having an extended dynamic range greater than any of the digital images by themselves;
(f) from a second position, capturing a second plurality of digital images comprising image pixels of the scene by exposing the image sensor to light transmitted from the scene as observed from the second position, and then repeating the steps (b) through (e) for the second plurality of images to generate a second composite image; and
(g) processing the first and second composite images to generate an extended dynamic range panorama image.

**2.** The method as claimed in claim 1 wherein the step (b) of evaluating each image after it is captured comprises evaluating each image for an illumination level indicative of saturated regions of the image.

**3.** The method as claimed in claim 1 wherein the step (b) of evaluating each image after it is captured comprises displaying each image after it is captured and evaluating the displayed image for an illumination level indicative of one or more regions of the image exceeding the limited dynamic range of the image.

**4.** A system for obtaining an extended dynamic range panorama image of a scene from a plurality of limited dynamic range images of the scene captured by a digital camera, said system comprising:

a camera having (a) an image sensor for capturing a plurality of digital images comprising image pixels of the scene by exposing the image sensor to light transmitted from the scene, wherein light transmittance upon the image sensor is adjustable; (b) means for evaluating each image after it is captured for an illumination level exceeding the limited dynamic range of the image for at least some of the image pixels; (c) a controller for adjusting the light transmittance upon the image sensor in order to obtain a subsequent digital image having a different scene brightness range, whereby said controller is operative based on the evaluation of each image

exceeding the limited dynamic range; and (d) a storage device for storing the plurality of digital images, whereby the camera is operated in a plurality of positions to capture respective pluralities of digital images comprising image pixels of the scene as observed from the plurality of positions; and
an offline processor for (a) processing the respective pluralities of stored images to generate a plurality of composite images, each having an extended dynamic range greater than any of the digital images by themselves and (b) processing the plurality of composite images to generate an extended dynamic range panorama image.

**5.** The system as claimed in claim 4 wherein said means for evaluating each image after it is captured evaluates each image for an illumination level indicative of saturated regions of the image.

**6.** The system as claimed in claim 4 wherein said means for evaluating each image after it is captured comprises a display device for displaying each image after it is captured and said controller comprises a manual controller for adjusting the light transmittance upon the image sensor.

**7.** The system as claimed in claim 4 wherein said means for evaluating each image after it is captured comprises a digital processor for automatically evaluating each image for an illumination level indicative of one or more regions of the image exceeding the limited dynamic range of the image and for generating a control signal indicative of the evaluation, and said controller comprises an automatic controller responsive to the control signal for adjusting the light transmittance upon the image sensor.

**8.** A method of obtaining a high bit depth panorama image of a scene from images of lower bit depth of the scene captured by an image sensor in a digital camera, said lower bit depth images also comprising lower dynamic range images, said method comprising steps of:

(a) from a first position, capturing a first plurality of digital images of lower bit depth comprising image pixels of the scene by exposing the image sensor to light transmitted from the scene as observed from the first position, wherein light transmittance upon the image sensor is variably attenuated for at least one of the images;
(b) evaluating each image after it is captured for an illumination level exceeding the limited dynamic range of the image for at least some of the image pixels;
(c) based on the evaluation of each image exceeding the limited dynamic range, adjusting the light transmittance upon the image sensor in order to obtain a subsequent digital image having a different scene brightness range;
(d) calculating an attenuation coefficient for each of the images corresponding to the degree of attenuation for each image;
(e) storing data for the reconstruction of one or more high bit depth images from the low bit depth images, said data including the first plurality of digital images and the attenuation coefficients;
(f) processing the stored data to generate a first composite image having a higher bit depth than any of the digital images by themselves;
(g) from a second position, capturing a second plurality of digital images of lower bit depth comprising image pixels of the scene by exposing the image sensor to light transmitted from the scene as observed from the second position, and then repeating the steps (b) through (f) on the second plurality of images to generate a second composite image; and
(h) processing the first and second composite images to generate a panorama image having a higher bit depth.

**9.** The method as claimed in claim 8 wherein the step (e) of storing data for the reconstruction of a high bit depth image comprises the steps of:

storing intensity values for de-saturated pixels obtained by changing light transmittance in step (c);
storing image positions for the de-saturated pixels obtained by changing light transmittance in step (c);
storing a transmittance attenuation coefficient associated with de-saturated pixels obtained by changing light transmittance in step (c);
storing intensity values for unsaturated pixels;
storing image positions for the unsaturated pixels captured in step (a); and
storing a transmittance attenuation coefficient associated with unsaturated pixels.

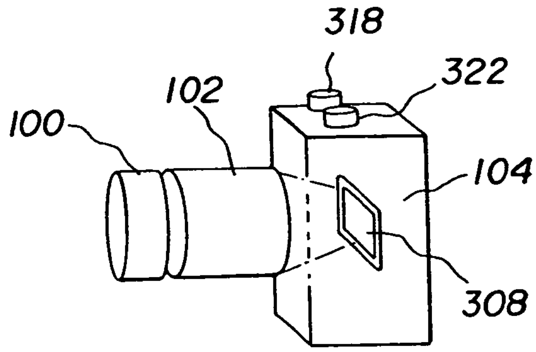


FIG. 1A

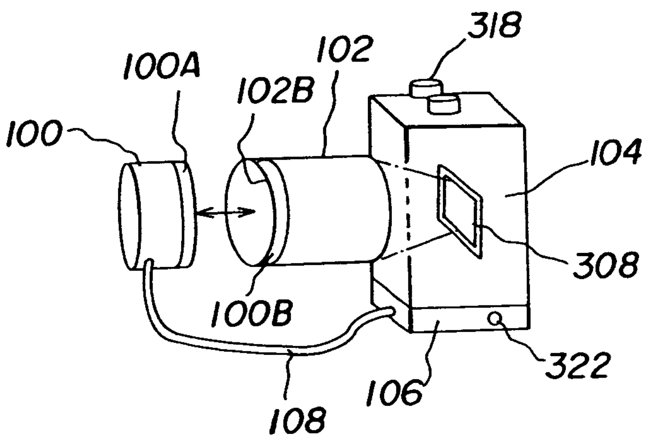


FIG. 1B

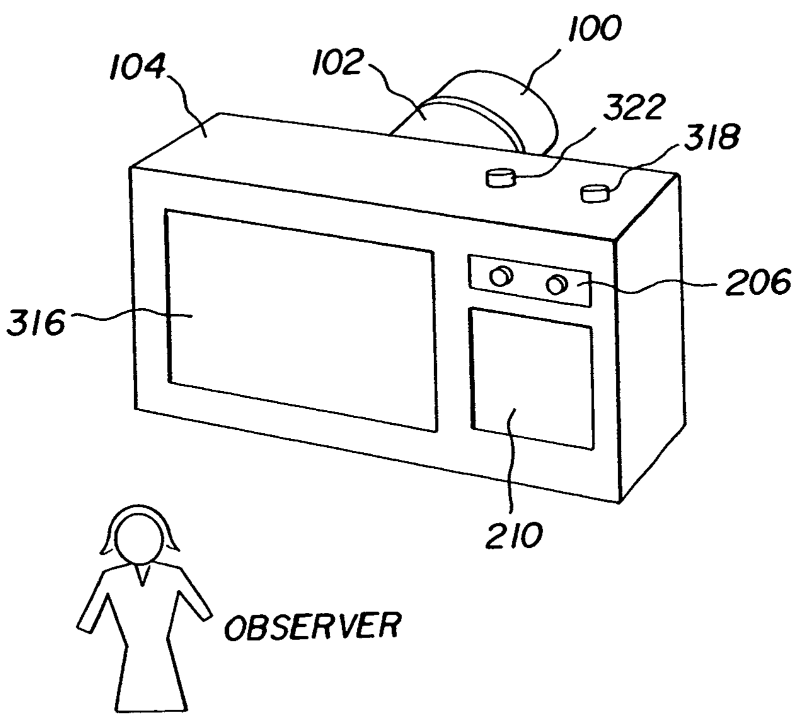


FIG. 2

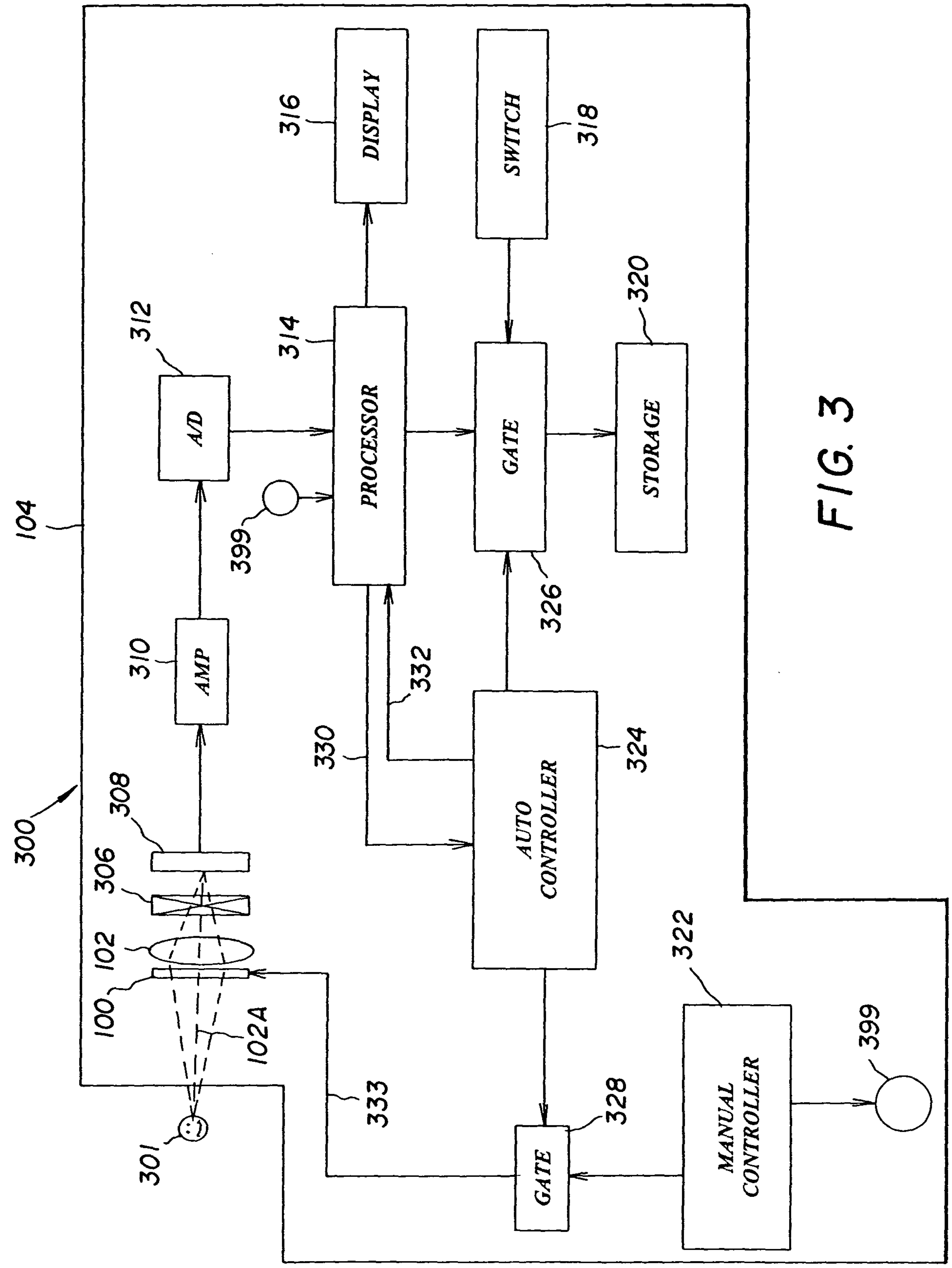

300
104
100
102
102A
306
308
301
310
AMP
312
A/D
314
PROCESSOR
316
DISPLAY
318
SWITCH
320
STORAGE
326
GATE
399
330
332
324
AUTO CONTROLLER
333
328
GATE
322
MANUAL CONTROLLER
399


FIG. 3

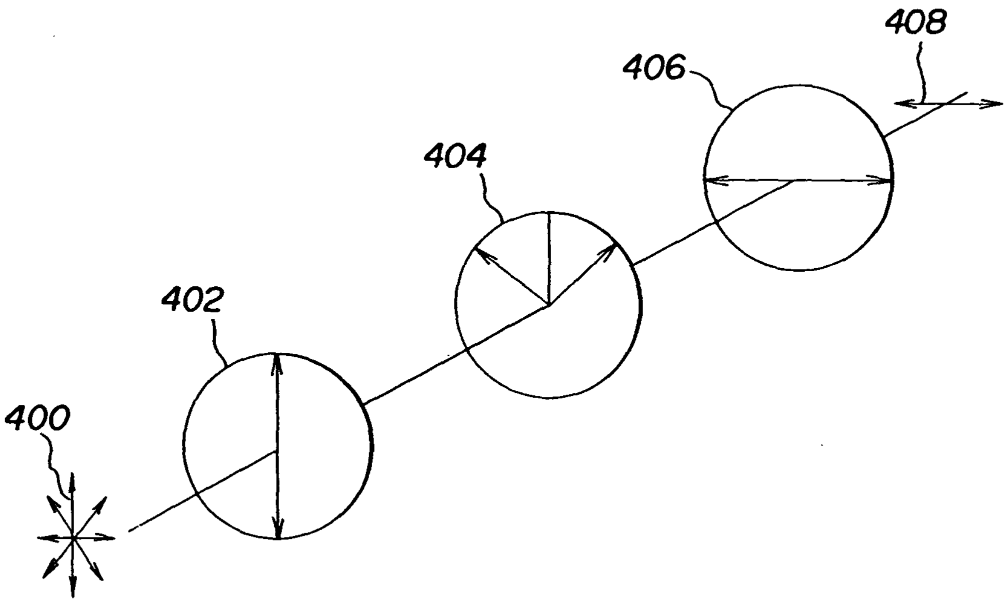
408
406
404
402
400

FIG. 4

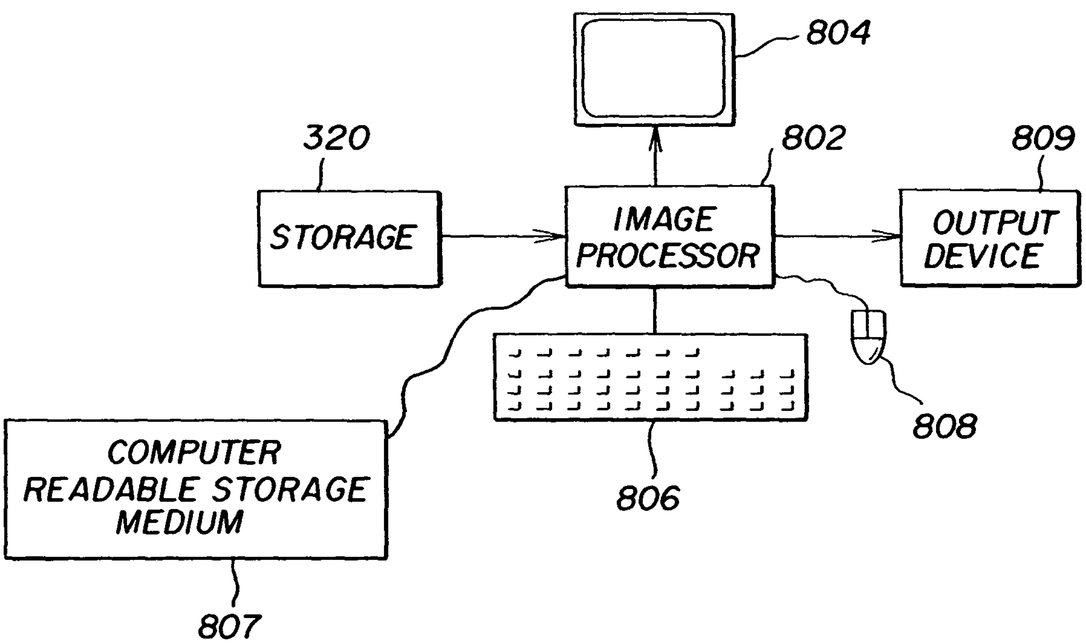
804
320
802
809
STORAGE
IMAGE PROCESSOR
OUTPUT DEVICE
808
COMPUTER READABLE STORAGE MEDIUM
806
807

FIG. 8

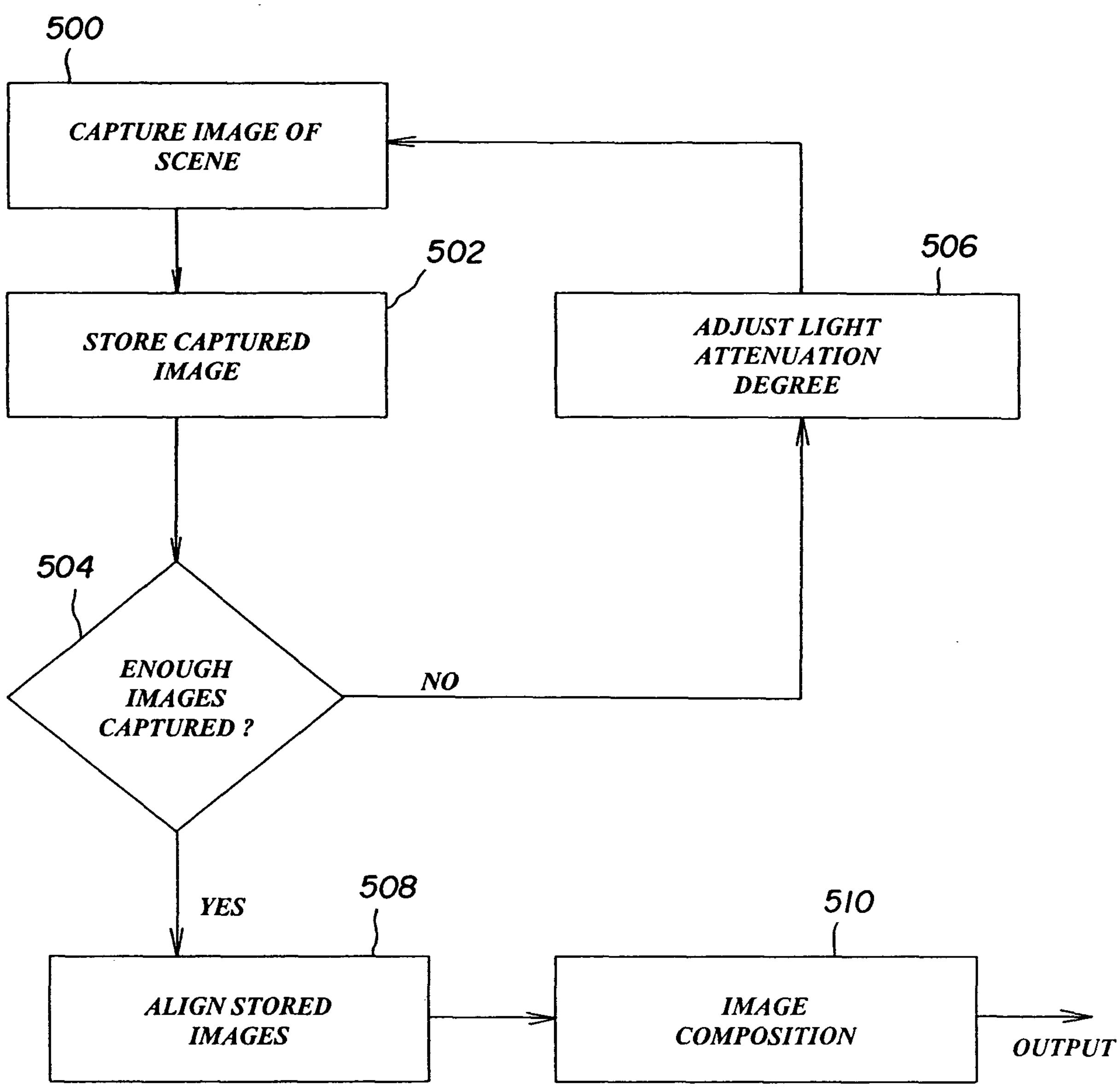
500
CAPTURE IMAGE OF SCENE
502
STORE CAPTURED IMAGE
504
ENOUGH IMAGES CAPTURED ?
NO
506
ADJUST LIGHT ATTENUATION DEGREE
YES
508
ALIGN STORED IMAGES
510
IMAGE COMPOSITION
OUTPUT

FIG. 5

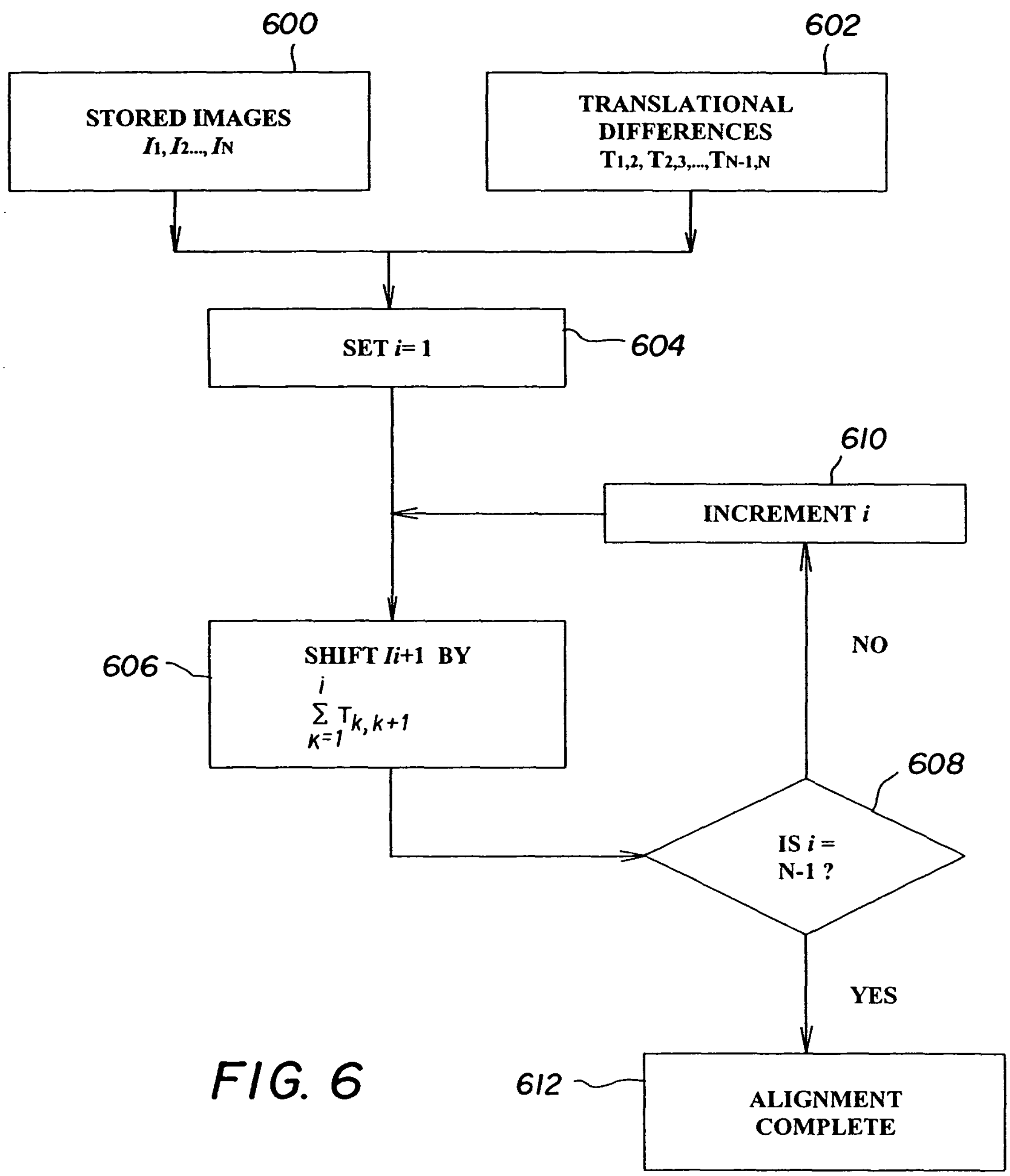
600
602
STORED IMAGES
I1, I2..., IN
TRANSLATIONAL
DIFFERENCES
T1,2, T2,3,...,TN-1,N
SET i= 1
604
610
INCREMENT i
606
SHIFT Ii+1 BY
$\sum_{K=1}^{i} T_{k,k+1}$
NO
608
IS i =
N-1 ?
YES
612
ALIGNMENT
COMPLETE

FIG. 6

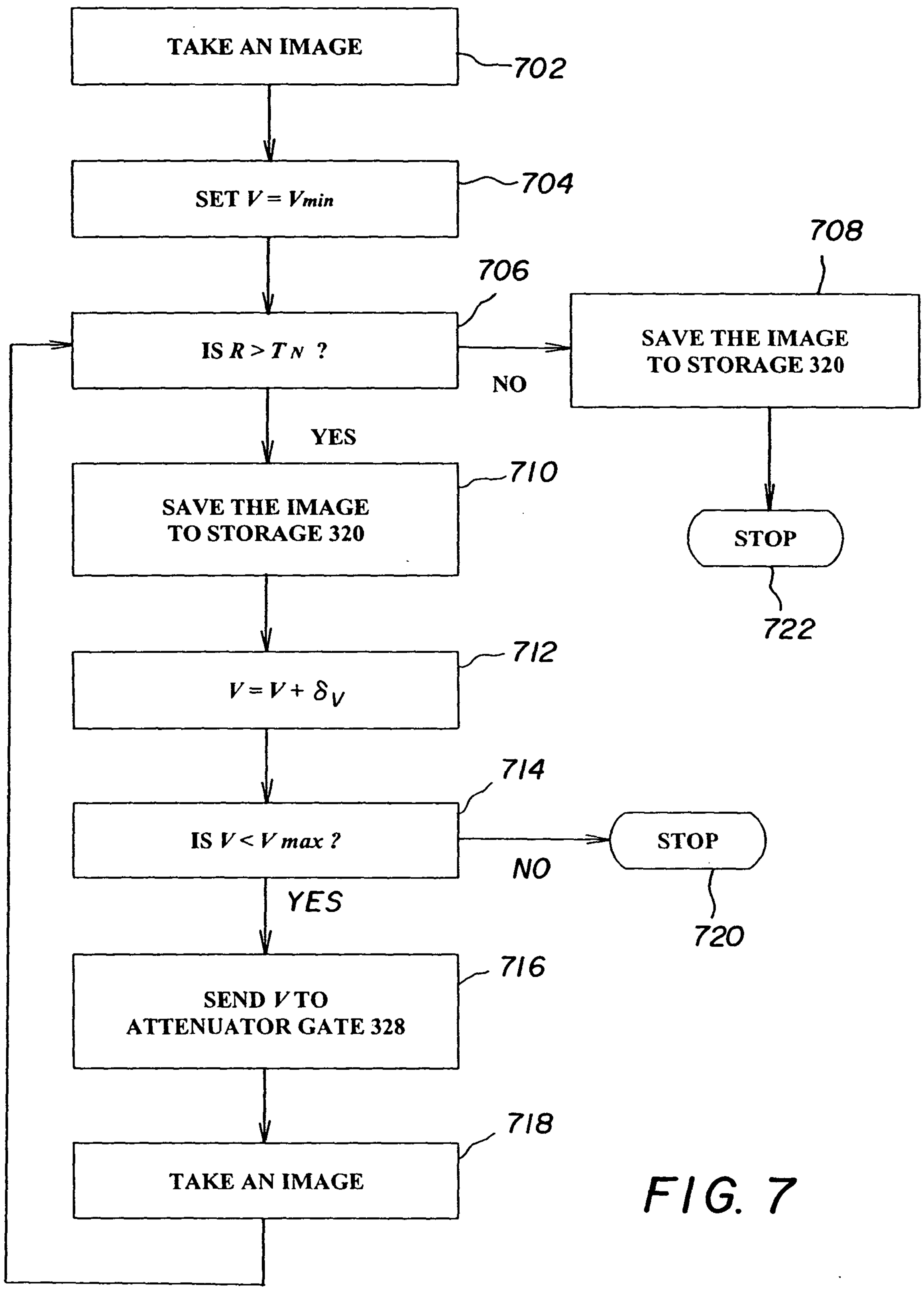
TAKE AN IMAGE
702
SET $V = V_{min}$
704
706
IS $R > T_N$ ?
NO
708
SAVE THE IMAGE TO STORAGE 320
YES
710
SAVE THE IMAGE TO STORAGE 320
STOP
722
712
$V = V + \delta_V$
714
IS $V < V_{max}$ ?
NO
STOP
720
YES
716
SEND $V$ TO ATTENUATOR GATE 328
718
TAKE AN IMAGE

FIG. 7

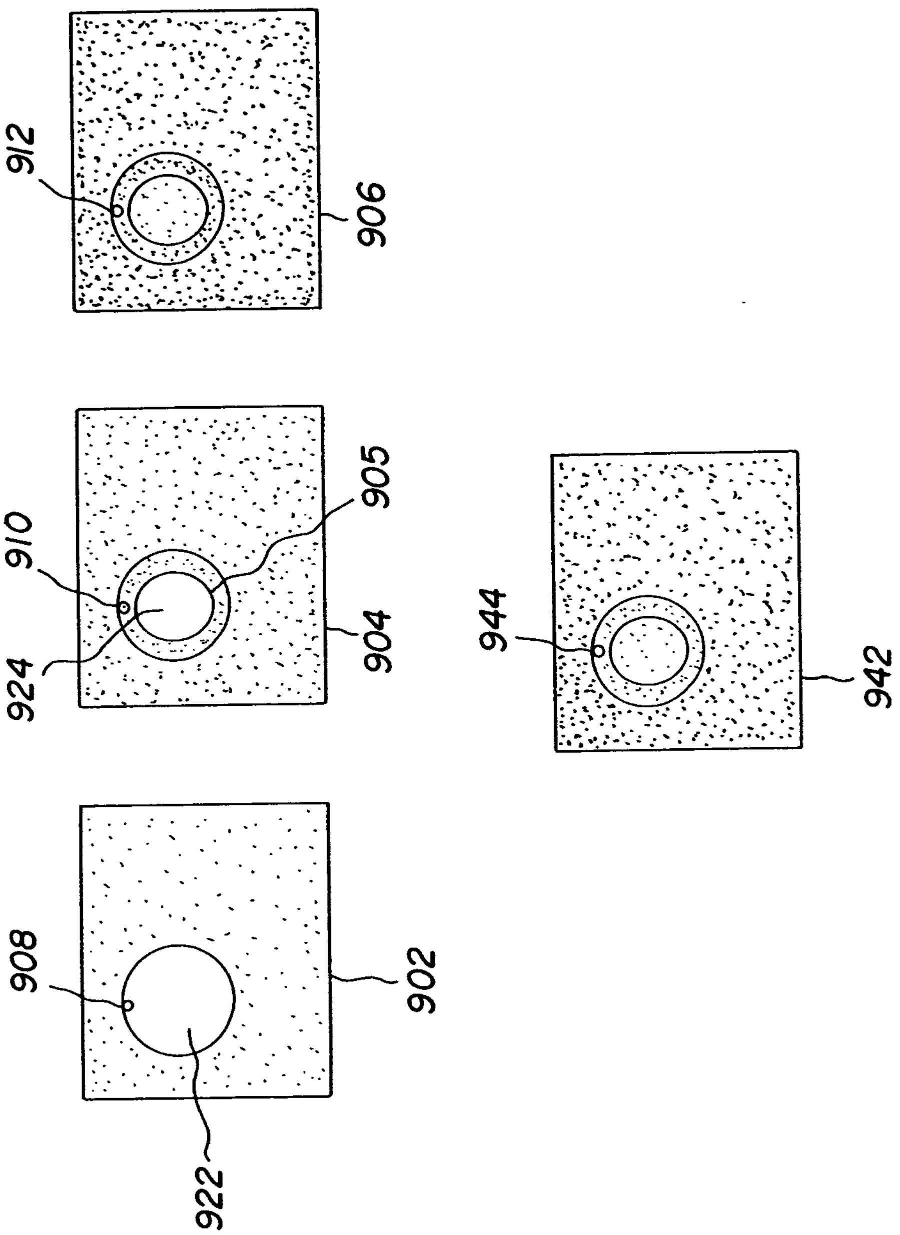


FIG. 9

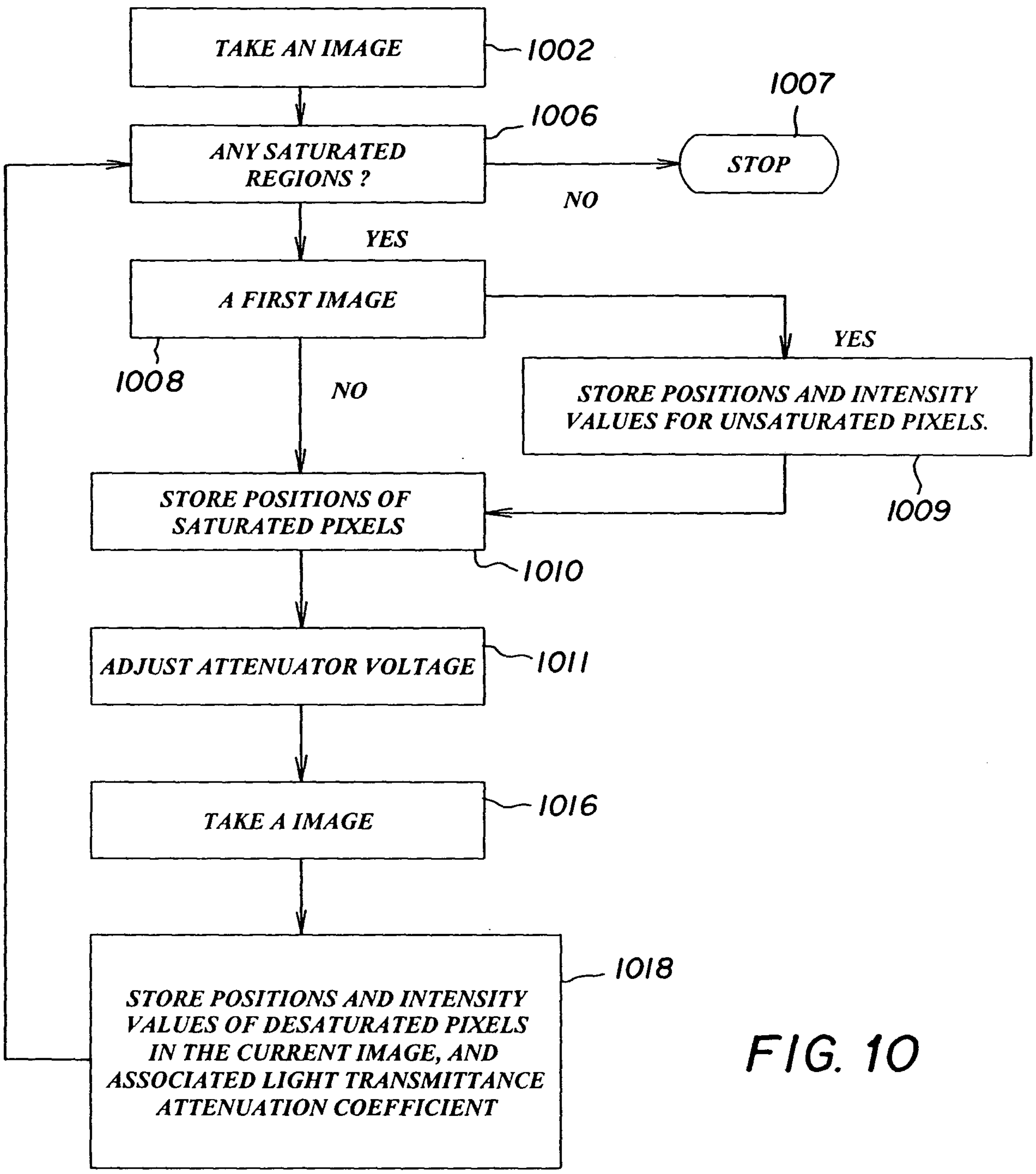
TAKE AN IMAGE
1002
1007
1006
ANY SATURATED REGIONS ?
STOP
NO
YES
A FIRST IMAGE
YES
1008
NO
STORE POSITIONS AND INTENSITY VALUES FOR UNSATURATED PIXELS.
STORE POSITIONS OF SATURATED PIXELS
1009
1010
ADJUST ATTENUATOR VOLTAGE
1011
TAKE A IMAGE
1016
1018
STORE POSITIONS AND INTENSITY VALUES OF DESATURATED PIXELS IN THE CURRENT IMAGE, AND ASSOCIATED LIGHT TRANSMITTANCE ATTENUATION COEFFICIENT

FIG. 10

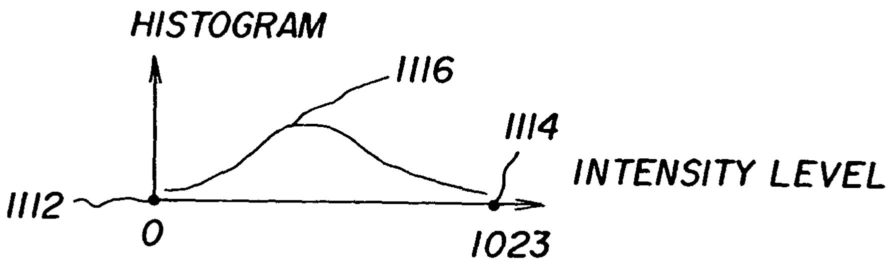


FIG. 11A

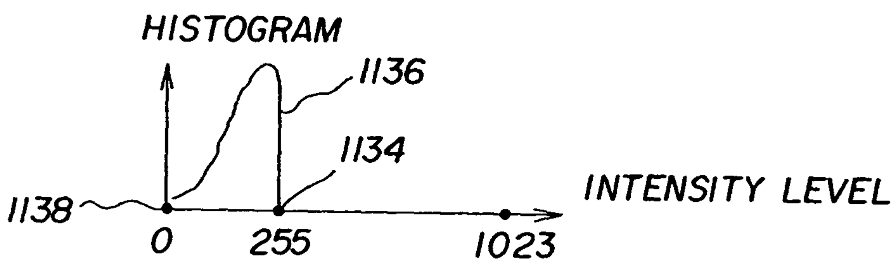


FIG. 11B

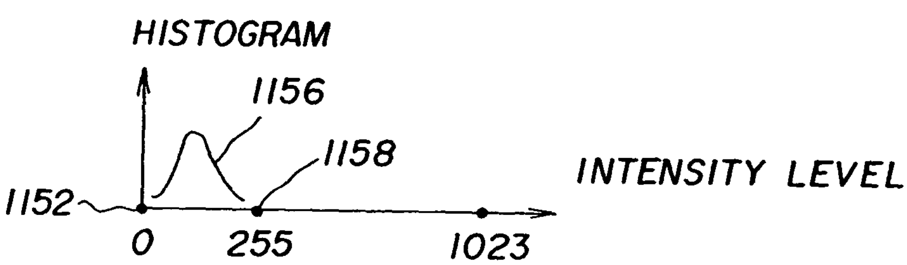


FIG. 11C

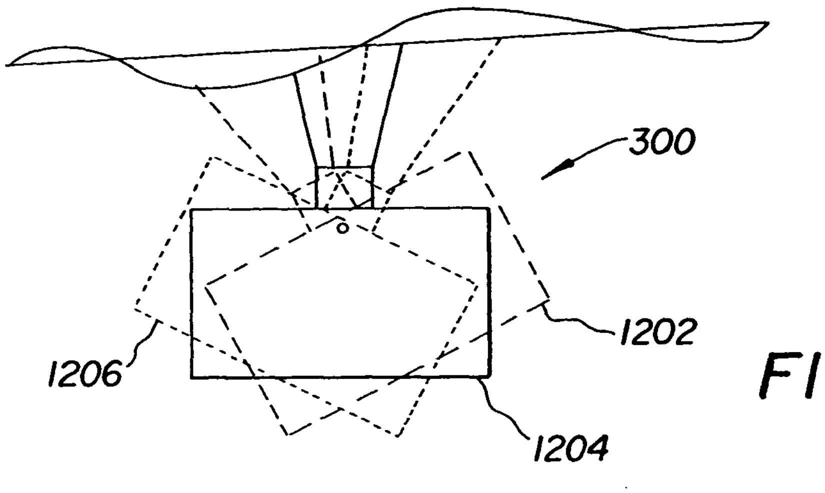


FIG. 12

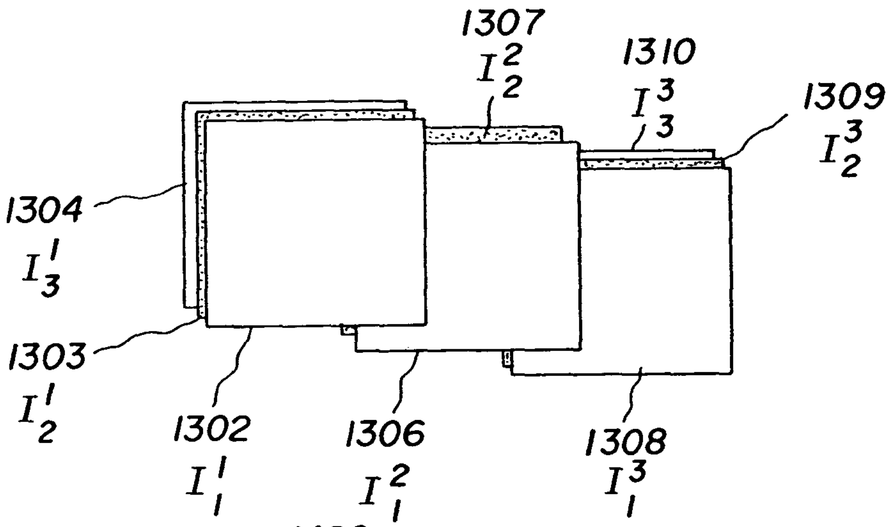


FIG. 13

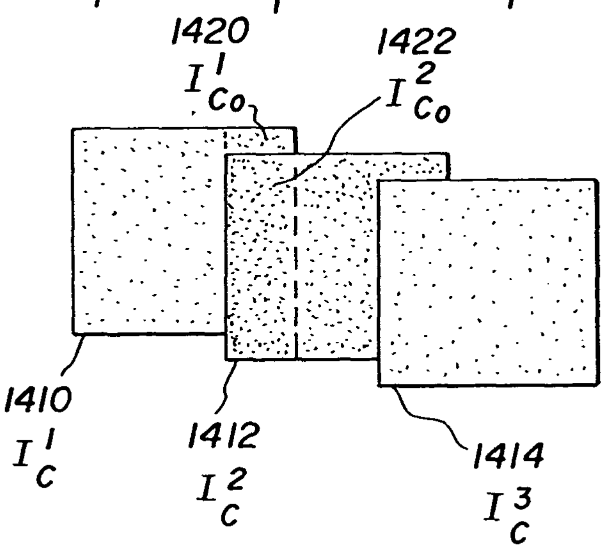


FIG. 14

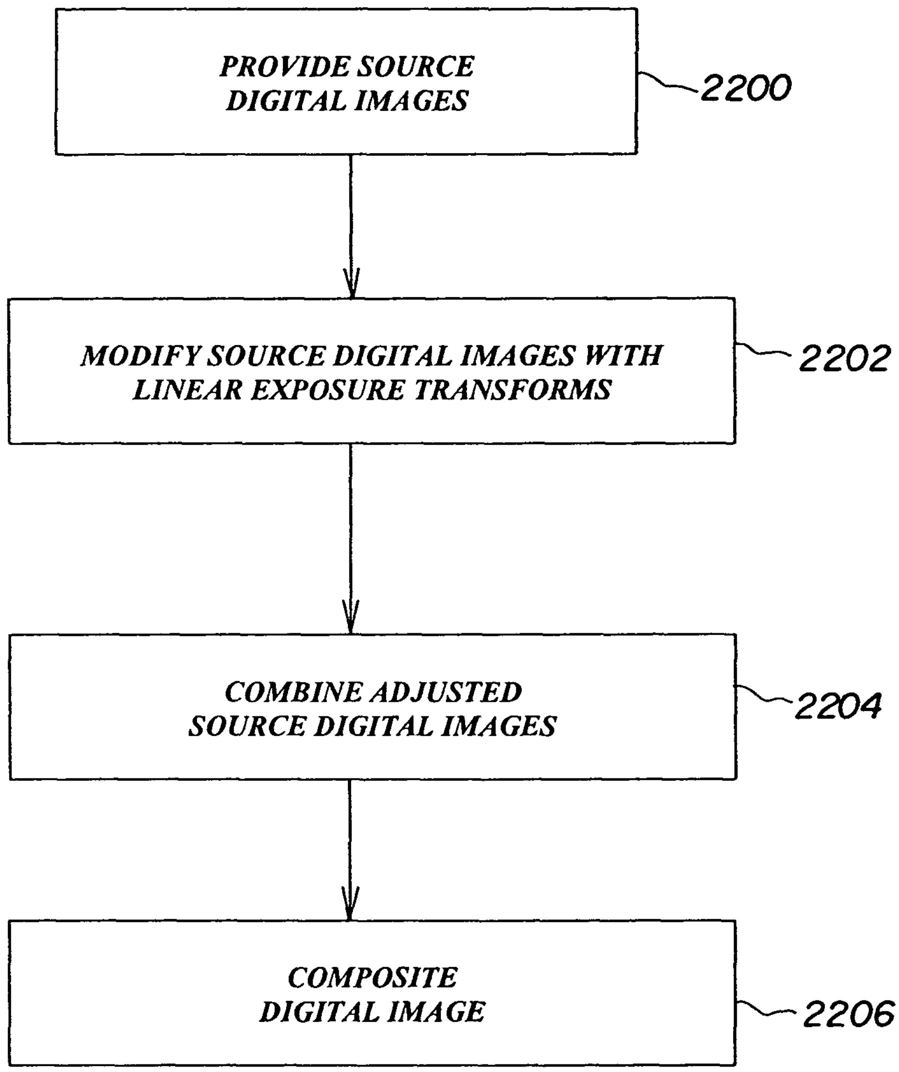
PROVIDE SOURCE DIGITAL IMAGES
2200
MODIFY SOURCE DIGITAL IMAGES WITH LINEAR EXPOSURE TRANSFORMS
2202
COMBINE ADJUSTED SOURCE DIGITAL IMAGES
2204
COMPOSITE DIGITAL IMAGE
2206

FIG. 15